(19)

Europäisches
Patentamt
European
Patent Office
Office européen
des brevets

(11) **EP 4 322 430 A1**

(12) **EUROPEAN PATENT APPLICATION**
published in accordance with Art. 153(4) EPC

(43) Date of publication:
**14.02.2024 Bulletin 2024/07**

(21) Application number: **22936734.7**

(22) Date of filing: **30.09.2022**

(51) International Patent Classification (IPC):
**H04L /(2006.01)**

(86) International application number:
**PCT/CN2022/123295**

(87) International publication number:
**WO 2024/000904 (04.01.2024 Gazette 2024/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2022   CN 202210762426**

(71) Applicant: **Forenova Technologies B.V
1043 GR Amsterdam (NL)**

(72) Inventors:
• **SHEN, Yiping
1043 GR Amsterdam (NL)**
• **YUAN, Jason
1043 GR Amsterdam (NL)**
• **CHEN, Chen
1043 GR Amsterdam (NL)**

• **LI, Da
1043 GR Amsterdam (NL)**
• **HUANG, Lei
1043 GR Amsterdam (NL)**
• **XUE, Congming
1043 GR Amsterdam (NL)**
• **DUAN, Yanzhong
1043 GR Amsterdam (NL)**
• **JI, Zhongxu
1043 GR Amsterdam (NL)**
• **LIU, Tao
1043 GR Amsterdam (NL)**
• **WANG, Yun
1043 GR Amsterdam (NL)**

(74) Representative: **Patentanwaltskanzlei
Matschnig & Forsthuber OG
Biberstraße 22
Postfach 36
1010 Wien (AT)**

(54) **TRAFFIC DETECTION METHOD AND APPARATUS, AND DEVICE AND READABLE STORAGE MEDIUM**

(57)      Provided are a traffic detection method and apparatus, a device and a readable storage medium. In the solution, for certain traffic actively transmitted from a certain device to the target host, it can be determined whether the traffic has periodicity by using an algorithm that is determined based on the numbers of occurrences of the traffic within the time window. For example, large numbers of occurrences of the traffic within the time window (that is, large values of elements in the sequence of numbers of occurrences) indicates frequent communication, and therefore a periodicity detection algorithm suitable to detecting a short period is determined. Small numbers of occurrences of the traffic within the time window (that is, small values of elements in the sequence of numbers of occurrences) indicates infrequent communication, and therefore a periodicity detection algorithm suitable to detecting a long period is determined. In this way, the accuracy of periodicity detection is improved, and the accuracy in detecting malicious traffic is improved.

```
┌─────────────────────────────────────┐
│ Obtain traffic for devices accessing │──── S101
│          a target host               │
└─────────────────────────────────────┘
                  │
                  ▼
┌─────────────────────────────────────┐
│ Determine, by using a sliding time   │
│ window, a number of occurrences of   │──── S102
│ path-sharing traffic in the obtained │
│ traffic within each time window to   │
│ obtain a sequence of numbers of      │
│ occurrences                          │
└─────────────────────────────────────┘
                  │
                  ▼
┌─────────────────────────────────────┐
│ Determine a periodicity detection    │
│ algorithm corresponding to the       │
│ sequence of numbers of occurrences,  │──── S103
│ and detect the sequence of numbers   │
│ of occurrences by using the          │
│ periodicity detection algorithm to   │
│ determine whether the path-sharing   │
│ traffic has periodicity              │
└─────────────────────────────────────┘
```

**Figure 1**

EP 4 322 430 A1

Obtain traffic for devices accessing a target host ⎯⎯ S101

Determine, by using a sliding time window, a number of occurrences of path-sharing traffic in the obtained traffic within each time window to obtain a sequence of numbers of occurrences ⎯⎯ S102

Determine a periodicity detection algorithm corresponding to the sequence of numbers of occurrences, and detect the sequence of numbers of occurrences by using the periodicity detection algorithm to determine whether the path-sharing traffic has periodicity ⎯⎯ S103

**Figure 1**

## Description

This application claims priority to Chinese Patent Application No. 202210762426.5, titled "TRAFFIC DETECTION METHOD AND APPARATUS, DEVICE AND READABLE STORAGE MEDIUM", filed on June 30, 2022 with the China National Intellectual Property Administration, which is incorporated herein by reference in its entirety.

## FIELD

The present disclosure relates to the field of computer technology, and in particular to a traffic detection method and apparatus, a device and a readable storage medium.

## BACKGROUND

Generally, malware communicates with a C2 server (Command & Control Server, C&C) in a heartbeat online manner. The malware periodically sends a heartbeat message to the C2 server, and the C2 server periodically forwards a malicious message to an attacked host. The message for the C2 server accessing the attacked host is generally periodic.

Therefore, it may be detected whether traffic for accessing the attacked host is periodic, so as to determine whether the traffic is malicious. A conventional periodicity detection algorithm is not applicable to calculation for both a long period and a short period. That is, periodicity of malicious traffic having a large frequency and malicious traffic having a small frequency between the C2 server and the attacked host cannot be detected accurately by using the conventional periodicity detection algorithm, which reduces accuracy in detecting malicious traffic.

Therefore, how to improve the accuracy in detecting periodicity of traffic is a problem to be solved by those skilled in the art.

## SUMMARY

In view of the above, an objective of the present disclosure is to provide a traffic detection method and apparatus, a device and a readable storage medium to improve accuracy in detecting periodicity of traffic. Solutions are described below.

In a first aspect, a traffic detection method is provided according to the present disclosure. The method includes: obtaining traffic for devices accessing a target host; determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity.

In an embodiment, the method further includes: proceeding, on determining that the traffic in the path-sharing traffic has similarity, to the steps of: determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity.

In an embodiment, the determining that the traffic in the path-sharing traffic has similarity includes: calculating fingerprints of traffic in the path-sharing traffic; clustering the fingerprints of the traffic in the path-sharing traffic to obtain a plurality of clusters; and determining that the traffic in the path-sharing traffic has similarity, in a case that any of the clusters has a traffic proportion greater than a preset first threshold.

In an embodiment, the calculating fingerprints of traffic in the path-sharing traffic includes: for each traffic in the path-sharing traffic, calculating a request header fingerprint and a request body fingerprint of the traffic, and concatenating the request header fingerprint and the request body fingerprint to obtain a fingerprint of the traffic. The request header fingerprint includes a local sensitive hash value of a designated domain value.

In an embodiment, the clustering the fingerprints of the traffic in the path-sharing traffic includes: for each of the fingerprints of the traffic in the path-sharing traffic, taking the fingerprint as a transform object, calculating importance values of components of the transform object to the transform object, respectively; and converting the components of the transform object to the importance values, correspondingly, to transform the transform object into a word vector; and clustering all word vectors obtained through the transformation.

In an embodiment, the determining a periodicity detection algorithm corresponding to the sequence of numbers of occurrences includes: sorting elements in the sequence of numbers of occurrences in a descending order based on values of the elements to obtain a descending sequence; selecting an element at a preset position in the descending sequence; determining, in a case that the selected element is less than or equal to a preset second threshold, a first algorithm as the periodicity detection algorithm corresponding to the sequence of numbers of occurrences; and determining, in a case that the selected element is greater than the preset second threshold, a second algorithm as the periodicity detection algorithm corresponding to the sequence of numbers of occurrences. A period to be detected by using the first algorithm is greater than a period to be detected by using the second algorithm.

In an embodiment, the detecting the sequence of numbers of occurrences by using the first algorithm includes: reducing a maximum value in the sequence of numbers of occurrences, and smoothing, through sliding average filtering, the sequence of numbers of occurrences after the reduction to obtain a target sequence; plotting a curve based on elements in the target sequence, and performing statistics on peak values and valley values in the curve to obtain a sequence of peak values and a sequence of valley values; deleting a first element and a last element from the sequence of peak values to obtain a new sequence of peak values; deleting a first element and a last element from the sequence of valley values to obtain a new sequence of valley value; subtracting, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtracting, for every two adjacent elements in the new sequence of peak values, a former one of the adjacent elements from a later one of the adjacent elements to obtain a sequence of peak value differences; subtracting, for every two adjacent elements in the new sequence of valley values, a former one of the adjacent elements from a later one of the adjacent elements to obtain a sequence of valley value differences; determining that the path-sharing traffic does not has periodicity, in a case that the number of elements in the new sequence of peak values is not equal to the number of elements in the new sequence of valley values; calculating an access period of the path-sharing traffic based on an average of the elements in the sequence of differences of corresponding elements and an average of the elements in the target sequence, and determining that the path-sharing traffic has periodicity, in a case that each of the sequence of differences of corresponding elements, the sequence of peak value differences and the sequence of valley value differences has a dispersion degree not greater than a dispersion degree threshold; and determining that the path-sharing traffic does not have periodicity, in a case that any one of the sequence of differences of corresponding elements, the sequence of peak value differences and the sequence of valley value differences has a dispersion degree greater than the dispersion degree threshold.

In an embodiment, the reducing a maximum value in the sequence of numbers of occurrences includes: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element.

In an embodiment, detecting the sequence of numbers of occurrences by using the second algorithm includes: obtaining, from the descending sequence, an element e at an E-th position and an element f at an F-th position; deleting, from the sequence of numbers of occurrences, an element not falling within an interval [e, f], and calculating an average of the remaining elements; and determining a ratio of a time length of the time window to the average as the access period of the oath-sharing traffic, and determining that the path-sharing traffic has periodicity.

In an embodiment, the method further includes: after the determining that the path-sharing traffic has periodicity, recording a source IP and a destination IP of the path-sharing traffic, and the access period outputted through the periodicity detection algorithm, and adding an abnormity identifier for at least one of the source IP or the path-sharing traffic.

In a second aspect, a traffic detection apparatus is provided according to the present disclosure. The apparatus includes: an obtaining module, configured to obtain traffic for devices accessing a target host; a statistics module, configured to determine by using a sliding time window, a number of occurrences of path-sharing traffic in the obtained traffic within each time window to obtain a sequence of numbers of occurrences; and a detection module, configured to determine a periodicity detection algorithm corresponding to the sequence of numbers of occurrences, and detect the sequence of numbers of occurrences by using the periodicity detection algorithm to determine whether the path-sharing traffic has periodicity.

In an embodiment, the traffic detection apparatus further includes a similarity detection module. The similarity detection module is configured to trigger, in a case that the traffic in the path-sharing traffic has similarity, steps of: determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity.

In an embodiment, the similarity detection module includes: a calculation unit, configured to calculate fingerprints of traffic in the path-sharing traffic; a clustering unit, configured to cluster the fingerprints of the traffic in the path-sharing traffic to obtain multiple clusters; and a determination unit, configured to determine that the traffic in the path-sharing traffic has similarity, in a case that any of the clusters has a traffic proportion greater than a preset first threshold.

In an embodiment, the calculation unit is specifically configured to: for each traffic in the path-sharing traffic, calculate a request header fingerprint and a request body fingerprint of the traffic, and concatenate the request header fingerprint and the request body fingerprint to obtain a fingerprint of the traffic. The request header fingerprint includes a local sensitive hash value of a designated domain value.

In an embodiment, the clustering unit is configured to: for each of the fingerprints of the traffic in the path-sharing traffic, take the fingerprint as a transform object, calculate importance values of components of the transform object to the transform object, respectively; and convert the components of the transform object to the importance values, correspondingly, to transform the transform object into a word vector; and cluster all word vectors obtained through the transformation.

In an embodiment, the detection module includes: a sorting unit, configured to sort elements in the sequence of numbers of occurrences in a descending order based on values of the elements to obtain a descending sequence; and a detection unit, configured to select an element at a preset position in the descending sequence; determine, in a case that the selected element is less than or equal to a preset second threshold, a first algorithm as the periodicity detection algorithm corresponding to the sequence of numbers of occurrences; and determine, in a case that the selected element is greater than the preset second threshold, a second algorithm as the periodicity detection algorithm corresponding to the sequence of numbers of occurrences. A period to be detected by using the first algorithm is greater than a period to be detected by using the second algorithm.

In an embodiment, the detection unit is specifically configured to: reduce a maximum value in the sequence of numbers of occurrences, and smooth, through sliding average filtering, the sequence of numbers of occurrences after the reduction to obtain a target sequence; plot a curve based on elements in the target sequence, and perform statistics on peak values and valley values in the curve to obtain a sequence of peak values and a sequence of valley values; delete a first element and a last element from the sequence of peak values to obtain a new sequence of peak values; delete a first element and a last element from the sequence of valley values to obtain a new sequence of valley value; subtract, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtract, for every two adjacent elements in the new sequence of peak values, a former one of the adjacent elements from a later one of the adjacent elements to obtain a sequence of peak value differences; subtract, for every two adjacent elements in the new sequence of valley values, a former one of the adjacent elements from a later one of the adjacent elements to obtain a sequence of valley value differences; determine that the path-sharing traffic does not has periodicity, in a case that the number of elements in the new sequence of peak values is not equal to the number of elements in the new sequence of valley values; calculate an access period of the path-sharing traffic based on an average of the elements in the sequence of differences of corresponding elements and an average of the elements in the target sequence, and determine that the path-sharing traffic has periodicity, in a case that each of the sequence of differences of corresponding elements, the sequence of peak value differences and the sequence of valley value differences has a dispersion degree not greater than a dispersion degree threshold; and determine that the path-sharing traffic does not have periodicity, in a case that any one of the sequence of differences of corresponding elements, the sequence of peak value differences and the sequence of valley value differences has a dispersion degree greater than the dispersion degree threshold.

In an embodiment, the reducing a maximum value in the sequence of numbers of occurrences includes: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element.

In an embodiment, the detection unit is specifically configured to: obtain, from the descending sequence, an element e at an E-th position and an element f at an F-th position; delete, from the sequence of numbers of occurrences, an element not falling within an interval [e, f], and calculate an average of the remaining elements; and determine a ratio of a time length of the time window to the average as the access period of the oath-sharing traffic, and determine that the path-sharing has periodicity.

In an embodiment, the traffic detection apparatus further includes a recording module. The recording module is configured to record, after the sequence of numbers of occurrences is detected by using the periodicity detection algorithm and it is determined that the path-sharing traffic has periodicity, a source IP and a destination IP of the path-sharing traffic, and an access period outputted through the periodicity detection algorithm, and add an abnormity identifier for at least one of the source IP or the path-sharing traffic.

In a third aspect, an electronic device is provided according to the present disclosure. The electronic device includes: a memory storing a computer program; and a processor, configured to execute the computer program to perform the traffic detection method as described above.

In a fourth aspect, a readable storage medium is provided according to the present disclosure. The readable storage medium stores a computer program that, when executed by a processor, implements the traffic detection method as described above.

In a fifth aspect, a computer program is provided according to the present disclosure. The computer program, when executed on a computer, causes the computer to implement the traffic detection method as described above.

As can be seen from the above solutions, the traffic detection method is provided according to the present disclosure. The method incudes: obtaining traffic for devices accessing a target host; determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity..

In the present disclosure, the path-sharing traffic transmitted through a same transmission path is determined from the traffic for the device accessing the target host. The path-sharing traffic in the present disclosure refers to the traffic that a certain device actively transmits to the target host. In the present disclosure, the number of occurrences of the path-sharing traffic within a time window is detected by using the sliding time window to obtain the sequence of numbers of occurrences. Then the periodicity detection algorithm corresponding to the sequence of numbers of occurrences is determined, and the sequence of numbers of occurrences is detected by using the periodicity detection algorithm to determine whether the path-sharing traffic has periodicity. It can be seen that in the present disclosure, for certain traffic actively transmitted from a certain device to the target host, it can be determined whether the traffic has periodicity by using an algorithm that is determined based on the numbers of occurrences of the traffic within the time window. For example, large numbers of occurrences of the traffic within the time window (that is, large values of elements in the sequence of numbers of occurrences) indicates frequent communication, and therefore a periodicity detection algorithm suitable to detecting a short period is determined. Small numbers of occurrences of the traffic within the time window (that is, small values of elements in the sequence of numbers of occurrences) indicates infrequent communication, and therefore a periodicity detection algorithm suitable to detecting a long period is determined. In this way, the accuracy of periodicity detection is improved, and the accuracy in detecting malicious traffic is improved.

The traffic detection apparatus, the device and the readable storage medium according to the present disclosure have the same technical effects as above.

**BRIEF** DESCRIPTION OF THE DRAWINGS

In order to more clearly describe the technical solutions in the embodiments of the present disclosure or the technical solutions in the conventional technology, drawings to be used in the description of the embodiments of the present disclosure or the conventional technology are briefly described hereinafter. It is apparent that the drawings described below are merely used for describing the embodiments of the present disclosure, and those skilled in the art may obtain other drawings according to the drawings without any creative effort.

Figure 1 is a flowchart of a traffic detection method according to an embodiment of the present disclosure;

Figure 2 is a schematic diagram showing that multiple devices access a target host according to an embodiment of the present disclosure;

Figure 3 is a flowchart of a traffic detection method according to another embodiment of the present disclosure;

Figure 4 is a schematic diagram of a traffic detection apparatus according to an embodiment of the present disclosure;

Figure 5 is a schematic diagram of an electronic device according to an embodiment of the present disclosure; and

Figure 6 is a schematic diagram of an electronic device according to another embodiment of the present disclosure.

**DETAILED DESCRIPTION OF EMBODIMENTS**

Technical solutions of embodiments of the present disclosure are described below in conjunction with the drawings of the embodiments of the present disclosure. Apparently, the embodiments described below are only some embodiments rather than all the embodiments of the present disclosure. Any other embodiments obtained by those skilled in the art based on the embodiments in the present disclosure without any creative effort fall within the protection scope of the present disclosure.

At present, periodicity of malicious traffic having a large frequency and malicious traffic having a small frequency between the C2 server and the attacked host cannot be detected accurately through a conventional periodicity detection algorithm, so thatan accuracy in detecting malicious traffic is reduced. Therefore, a traffic detection solution is provided according to the present disclosure to improve accuracy of periodicity detection, and thereby improve accuracy in detecting malicious traffic.

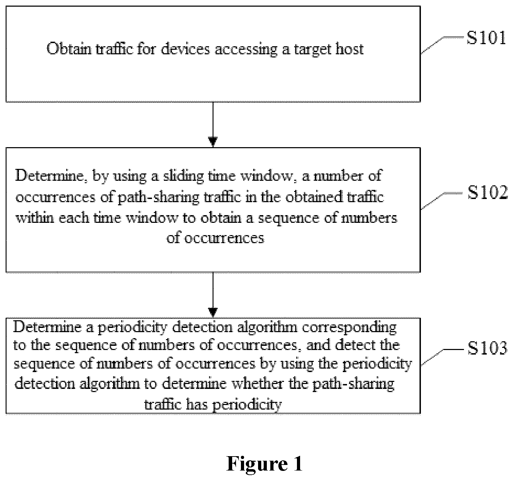

Reference is made to Figure 1. A traffic detection method is provided according to an embodiment of the present disclosure. The method includes steps S101 to S103.

In step S101, traffic for devices accessing a target host is obtained.

In step S102, the number of occurrences of path-sharing traffic in the obtained traffic within each time window is determined by using a sliding time window to obtain a sequence of numbers of occurrences.

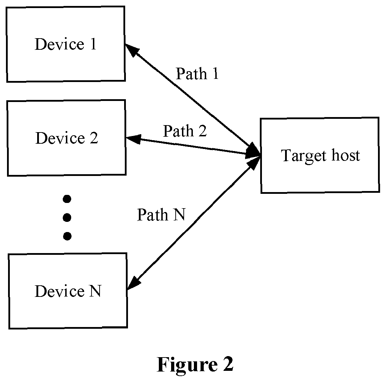

The traffic obtained in step S101 refers to traffic transmitted from multiple devices to the target host over a time period. The path-sharing traffic in the obtained traffic refers to traffic transmitted from a certain device to the target host. Reference may be made to Figure 2, which shows a schematic diagram showing that multiple devices access a target host. In Figure 2, all traffic transmitted to the target host through transmission paths is the traffic obtained in step S101. The traffic may be an HTTP message.

For traffic transmitted to the target host through any transmission path in Figure 2, the number of occurrences of the traffic within a time window is determined by using a sliding time window, so as to obtain a sequence of numbers of occurrences. For example, it is assumed that the time window covers 30 seconds and slides by 2 seconds each time. The number of occurrences of traffic within an interval from a 0th second to a 29th second is obtained, the number of occurrences of traffic within an interval from a 2nd second to a 31st second is obtained, and so on. In this way, a sequence of numbers of occurrences $\{x_1, x_2,..., x_n\}$ is obtained, where $x_1$ represents the number of occurrences of traffic within the interval from the 0th second to the 29th second. The number of occurrences of traffic within a time window refers to the number of communications within the time window, which may be represented by number of transmissions of data.

In step S103, a periodicity detection algorithm corresponding to the sequence of numbers of occurrences is determined, and the sequence of numbers of occurrences is detected by using the periodicity detection algorithm to determine whether the path-sharing traffic has periodicity.

In an embodiment, the periodicity detection algorithm may be determined for the sequence of numbers of occurrences $\{x_1, x_2, ..., x_n\}$ obtained in the previous step. The sequence of numbers of occurrences $\{x_1, x_2, ..., x_n\}$ is taken as an input to the periodicity detection algorithm, so as to detect whether the traffic transmitted to the target host through a transmission path has periodicity.

In order to avoid detecting non-periodic path-sharing traffic, it is determined, before determining the sequence of numbers of occurrences, whether traffic in the Ppath-sharing traffic has similarity. Existence of the similarity of the traffic in the path-sharing traffic indicates a high probability that the path-sharing traffic has periodicity. In this case, the method proceeds to the steps of: determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity. An access period is outputted in a case that the path-sharing traffic has periodicity.

Messages for a C2 server accessing an attacked host are generally periodic. Therefore, it may be determined, based on the periodicity detection algorithm, whether a device communicating with the target host is C2 server under a malicious control. Therefore, in an implementation, on determining that the path-sharing traffic has periodicity, the traffic detection method further includes: recording a source IP and a destination IP of the path-sharing traffic, and an access period outputted through the periodicity detection algorithm, and adding an abnormity identifier for at least one of the source IP or the path-sharing traffic. In this way, it is conducive to further analysis on the traffic having the abnormity identifier, for example, identifying what a malicious behavior is.

In the present disclosure, the path-sharing traffic transmitted through a same transmission path is determined from the traffic for the device accessing the target host. The path-sharing traffic in the present disclosure refers to the traffic that a certain device actively transmits to the target host. In the present disclosure, the number of occurrences of the path-sharing traffic within a time window is detected by using the sliding time window to obtain the sequence of numbers of occurrences. Then the periodicity detection algorithm corresponding to the sequence of numbers of occurrences is determined, and the sequence of numbers of occurrences is detected by using the periodicity detection algorithm to determine whether the path-sharing traffic has periodicity. It can be seen that in the present disclosure, for certain traffic actively transmitted from a certain device to the target host, it can be determined whether the traffic has periodicity by using an algorithm that is determined based on the numbers of occurrences of the traffic within the time window. For example, large numbers of occurrences of the traffic within the time window (that is, large values of elements in the sequence of numbers of occurrences) indicates frequent communication, and therefore a periodicity detection algorithm suitable to detecting a short period is determined. Small numbers of occurrences of the traffic within the time window (that is, small values of elements in the sequence of numbers of occurrences) indicates infrequent communication, and therefore a periodicity detection algorithm suitable to detecting a long period is determined. In this way, the accuracy of periodicity detection is improved, and the accuracy in detecting malicious traffic is improved.

Based on the above embodiments, it should be noted that it is determined, before determining the sequence of numbers of occurrences, whether traffic in the Ppath-sharing traffic has similarity, in order to avoid detecting non-periodic path-sharing traffic. Existence of the similarity of the traffic in the path-sharing traffic indicates a high probability that the path-sharing traffic has periodicity. In this case, the detection of the periodicity is performed. Therefore, in an implementation, in a case that the traffic in the path-sharing traffic has similarity, the method proceeds to the step of: determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity.

In an implementation, a process of determining that the traffic in the path-sharing traffic has similarity includes: calculating fingerprints of the traffic in the path-sharing traffic; clustering the fingerprints of the traffic in the uplink traffic to obtain multiple clusters; and determining that the traffic in the path-sharing traffic has similarity, in a case that any of the clusters has traffic proportion greater than a preset first threshold. In an assumption, three clusters a, b and c are obtained from S fingerprints through the clustering, the cluster a includes fingerprints in a quantity of A, the cluster b includes fingerprints in a quantity of B, and the cluster c includes fingerprints in a quantity of C. Traffic proportion of the cluster a is expressed as A/S, traffic proportion of the cluster b is expressed as B/S, and traffic proportion of the cluster c is expressed as C/S. Therefore, each of A/S, B/S and C/S is compared with the preset first threshold. In a case that at least one of A/S, B/S and C/S is greater than the preset first threshold, it is determined that most of the traffic in the path-sharing traffic has similarity. Thereby, it is determined that traffic in the path-sharing traffic has the similarity. The clustering may be realized by using DBSCAN or other algorithms. The DBSCAN is a clustering algorithm based on high-density connected regions, and is capable of dividing regions having a high density into clusters and finding a cluster in an arbitrary shape from noisy data.

In an implementation, a process of calculating fingerprints of the traffic in the path-sharing traffic includes: for each traffic in the path-sharing traffic, calculating a request header fingerprint and a request body fingerprint of the traffic, and concatenating the request header fingerprint and the request body fingerprint to obtain a fingerprint of the traffic. The request header fingerprint includes a local sensitive hash value of a designated domain value.

The request header fingerprint may include any one or a combination of: a logarithm of a total length of request parameters, a quantity of the request parameters, a logarithm of an average length of the request parameters, a logarithm of a length of a uri, a quantity of hierarchies of a directory of the uri, a document extension, a request method type, a version of HTTP, abbreviations of domain names of header domains of request headers of the HTTP, abbreviations of domain names of header names of a part of the request headers of the HTTP, and local sensitive hash vales of domain values of header domains of a part of the request headers of the HTTP. The part of the request headers whose local sensitive hash values are calculated may include any one or a combination of: Connection, Accept-Encoding, Content-Encoding, Cache-Control, Te, Accept-Charset, Content-Type, Accept, Accept-Language, User-Agent, and the like. These features in the request header fingerprint are recorded at intervals of a space.

The request body fingerprint includes any one or a combination of: entropy of a request body, a logarithm of a length of the request body, and the like. These features in the request body fingerprint are recorded at intervals of a space.

In an implementation, a process of clustering the fingerprints of the traffic in the path-sharing traffic includes: for each of the fingerprints of the traffic in the path-sharing traffic, taking the fingerprint as a transform object, calculating importance values of each of components of the transform object to the transform object, respectively; and converting the components of the transform object to the importance values, correspondingly, to transform the transform object into a word vector; and clustering all word vectors obtained through the transformation. A fingerprint may be transformed into a word vector by using a TF-IDF algorithm. In an example, hash values in the fingerprint of the traffic may be split into characters and other features in the fingerprint may be split based on spaces. In this way, components of the fingerprint are obtained. For each of the components, an importance value corresponding to the component is calculated and the component is mapped to the importance value. Thereby, a group of data is obtained through mapping, and the group of data is a word vector obtained by transforming the fingerprint. The TF-IDF is a weighting method generally applied for information retrieval and text mining. The TF-IDF is capable of evaluating importance of a word to a document in a document set or a corpus. The importance of a word is directly proportional to the number of occurrences of the word in the document, and inversely proportional to a frequency of occurrences of the word in the corpus.

In the TF-IDF, the term frequency (TF) refers to a frequency of occurrences of a given word in a document. The number of texts is normalized to prevent the document from being a long document. For words in a certain document, the TF is calculated as

$$TF_{i,j} = \frac{n_{i,j}}{\sum_k n_{k,j}}$$, where $n_{i,j}$ represents the number of occurrences of a word $t_i$ in a document $d_j$, and the denominator represents a sum of numbers of occurrences of all words in the document $d_j$. The inverse document frequency (IDF) indicates a measurement of general importance of a word. The IDF of a certain word is calculated as $$IDF_i = \log \frac{|D|}{|\{j : t_i \in d_j\}| + 1}$$, where |D| repre-

sents a total number of documents in a corpus, $|\{j:t_i \in d_j\} \in d_j|$ represents the number of documents which belong to the corpus and include the word $t_i$. There has $TF\text{-}IDF_{i,j} = TF_{i,j} * IDF_i$. An importance of a given word to a document may be determined based on the TF and the IDF. Based on this principle, a fingerprint can be transformed into a word vector.

Based on the above embodiments, it should be noted that in an embodiment, a periodicity detection algorithm suitable for a certain sequence of numbers of occurrences may be determined based on a specific element in the sequence of numbers of occurrences. Therefore, in an implementation, a process of determining a periodicity detection algorithm corresponding to the sequence of numbers of occurrences includes: sorting elements in the sequence of numbers of occurrences in a descending order based on values of the elements to obtain a descending sequence; selecting an element at a preset position in the descending sequence; determining, in a case that the selected element is less than or equal to a preset second threshold, a first algorithm as the periodicity detection algorithm corresponding to the sequence of numbers of occurrences; and determining, in a case that the selected element is greater than the preset second threshold, a second algorithm as the periodicity detection algorithm corresponding to the sequence of numbers of occurrences, a period to be detected by using the first algorithm is greater than a period to be detected by using the second algorithm. The preset position may be, for example, a position at which an upper quartile is located, so that the upper quartile may be selected from the descending sequence and compared with the preset second threshold.

It should be noted that a small period indicates frequent communication, and a large period indicates infrequent communication. The first algorithm is applicable to detecting traffic in the infrequent communication, and the second algorithm is applicable to detecting traffic in the frequent communication. In a case that values of elements in the sequence of numbers of occurrences are relatively large, the communication is frequent and the second algorithm applicable to detecting a small period is selected. In a case that values of elements in the sequence of numbers of occurrences are relatively small, the communication is infrequent and the first algorithm applicable to detecting a large period is selected. Therefore, the first algorithm is referred to as a long-period detection algorithm, and the second algorithm is referred to as a short-period detection algorithm.

In an implementation, the sequence of numbers of occurrences is detected by using the first algorithm by: reducing a maximum value in the sequence of numbers of occurrences, and smoothing, through sliding average filtering, the sequence of numbers of occurrences after the reduction to obtain a target sequence; plotting a curve based on elements in the target sequence, and performing statistics on peak values and valley values in the curve to obtain a sequence of peak values and a sequence of valley values; deleting a first element and a last element from the sequence of peak values to obtain a new sequence of peak values; deleting a first element and a last element from the sequence of valley values to obtain a new sequence of valley value; subtracting, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtracting, for every two adjacent elements in the new sequence of peak values, a former one of the adjacent elements from a later one of the adjacent elements to obtain a sequence of peak value differences; subtracting, for every two adjacent elements in the new sequence of valley values, a former one of the adjacent elements from a later one of the adjacent elements to obtain a sequence of valley value differences; determining that the path-sharing traffic does not has periodicity, in a case that the number of elements in the new sequence of peak values is not equal to the number of elements in the new sequence of valley values; calculating an access period of the path-sharing traffic based on an average of the elements in the sequence of differences of corresponding elements and an average of the elements in the target sequence, and determining that the path-sharing traffic has periodicity, in a case that each of the sequence of differences of corresponding elements, the sequence of peak value differences and the sequence of valley value differences has a dispersion degree not greater than a dispersion degree threshold; and determining that the path-sharing traffic does not have periodicity, in a case that any one of the sequence of differences of corresponding elements, the sequence of peak value differences and the sequence of valley value differences has a dispersion degree greater than the dispersion degree threshold. In an implementation, the reducing a maximum value in the sequence of numbers of occurrences includes: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element.

The calculating an access period of the path-sharing traffic based on an average of the elements in the sequence of differences of corresponding elements and an average of the elements in the target sequence includes: dividing the average of the elements in the sequence of differences of corresponding elements by the average of the elements in the target sequence to obtain the access period of the path-sharing traffic.

In an implementation, a detection process of the first algorithm (long-period detection algorithm) includes the following steps (1) to (7).

In step (1), an upper ninth quintile is determined for a sequence of numbers of occurrences $X=\{x_1, x_2,......, x_n\}$, and the upper ninth quintile is determined as a target element. Then, an element which is in the sequence X of numbers of occurrences and greater than the target element is amended to the target element.

In step (2), the sequence X after the amending is smoothed through sliding average filtering to obtain a new sequence, namely, a target sequence. A curve plotted based on the target sequence is smoother and more regular. Step (1) is performed since the average filtering may be affected by values with large differences and some outliers with large differences cannot be eliminated.

Through the sliding average filtering, a sequence obtained through continuous sampling is transformed into a new sequence, and a process thereof is described below. A sliding window having a size of w is set. Elements in the sequence X are sequentially entered to the sliding window w one by one. One element enters the sliding window each time, and the number of elements within the sliding window does not exceed w. An average of the elements in the sliding window is calculated and recorded. Each time one element is newly added to the sliding window and the number of elements in the sliding window is equal to w+1, a leading element in the sliding window is removed to control the number of elements in the sliding window to be equal to w. Then an average of all elements in the sliding window is calculated and recorded.

Based on the above principle, for the sequence of numbers of occurrences $X=\{x_1, x_2,......, x_n\}$, averages are expressed as:

$$\frac{x_1}{w}, \frac{x_1+x_2}{w},\cdots \frac{x_1+x_2+\ldots+x_w}{w},\cdots \frac{x_n}{w}$$

. In this way, the number of the averages is greater than n. In order to keep the number of the averages to be consistent with a length of the original sequence of numbers of occurrences, n averages in the middle of the averages are selected to form the target sequence. For example, a first one of the averages is removed from the averages, and then it is determined whether the number of the remaining averages is equal to n; and the last one of the averages is then removed from the averages in a case that the number of the remaining averages is not equal to n and it is determined whether the number of the remaining averages is equal to n. The above operations are repeated until the number of the remaining averages is equal to n.

In step (3), a curve is plotted based on the elements in the target sequence. A sequence of peak values $A=\{a_1, a_2,..., a_{n-1}, a_n\}$ and a sequence of valley values $B=\{b_1, b_2,..., b_{n-1}, b_n\}$ are obtained through statistics. In the sequences, $a_1, a_2,..., a_{n-1}, a_n$ are arranged in a chronological order, and $b_1, b_2,..., b_{n-1}, b_n$ are arranged in a chronological order.

In step (4), in order to ensure integrity of the period outputted finally , a first element and a last element in the sequence of peak values are removed to obtain a new sequence of peak values $A_s=\{a_2,...a_i,..., a_{n-1}\}$. A first element and a last element in the sequence of valley values are removed to obtain a new sequence of valley values $B_s=\{b_2,...b_j,...,b_{n-1}\}$.

In step (5), it is determined whether the number of elements in $A_s$ is equal to the number of the elements in $B_s$. A period can be calculated in a case that the number of elements in $A_s$ is equal to the number of elements in $B_s$. It is determined that no period can be calculated in a case that the number of elements in $A_s$ is not equal to the number of elements in $B_s$. In this case, a prompt indicating that the traffic does not have periodicity may be outputted. As can be seen, applying of the periodicity detection algorithm can output a determination result indicating whether the traffic has periodicity, and a period in a case that the traffic has periodicity.

In step (6), in a case that the period can be calculated, the elements in $B_s$ are subtracted from the elements at corresponding positions in $A_s$, respectively, to obtain a sequence C of differences of corresponding elements. For every two adjacent elements in $A_s$, a former one of the adjacent elements is subtracted from a later one of the adjacent elements to obtain a sequence E of peak value differences. For every two adjacent elements in $B_s$, a former one of the adjacent elements is subtracted from a later one of the adjacent elements to obtain a sequence F of valley value differences. There has $C=\{c_2,...,c_k,...,c_{n-1}\}$, $c_k=a_k-b_k$, $a_k\in A_s$, $b_k\in B_s$, $E=\{a_3-a_2,...,a_i-a_{i-1},...,a_n-a_{n-1}\}$, and F can be obtained with reference to E.

In step (7), dispersion degrees of C, E and F are determined. In a case that each of the C, E and F has a dispersion degree not greater than a corresponding dispersion degree threshold, an average of the elements in C is divided by an average of the elements in the target sequence to obtain an access period. Otherwise, it is determined that the traffic does not have periodicity.

The dispersion degree threshold may be a product of a preset scale r and an average of the elements in C, E or F. The dispersion degree of any of C, E and F may be expressed by a standard deviation. That is, while determining the dispersion degree of C, the dispersion degree threshold is equal to a product of an average of elements in C and the preset scale r. While determining the dispersion degree of E, the dispersion degree threshold is equal to a product of an average of elements in E and the preset scale r. While determining the dispersion degree of F, the dispersion degree threshold is equal to a product of an average of elements in F and the preset scale r.

In an implementation, a process of detecting on the sequence of numbers of occurrences by using the second algorithm includes: obtaining, from the descending sequence, an element e at an E-th position and an element f at an F-th position; deleting, from the sequence of numbers of occurrences, an element not falling within an interval [e, f], and calculating an average of the remaining elements; and determining a ratio of a time length of the time window to the average as the access period of the path-sharing traffic, and determining that the path-sharing traffic has periodicity. The element e is an upper quartile, and the element f is a lower quartile.

In an implementation, a detection process of the second algorithm (short-period detection algorithm) includes the following steps (1) to (3).

In step (1), an upper quartile p and a lower quartile q are determined for the sequence of numbers of occurrences $X=\{x_1, x_2,..., x_n\}$.

In step (2), an element not falling within an interval [p, q] (i.e., an interval [e, f]) is deleted from the sequence X of numbers of occurrences, and an average of the remaining elements is calculated.

In step (3), a time length T of the sliding time window is divided by the average as an access period, and it is determined that the traffic has periodicity.

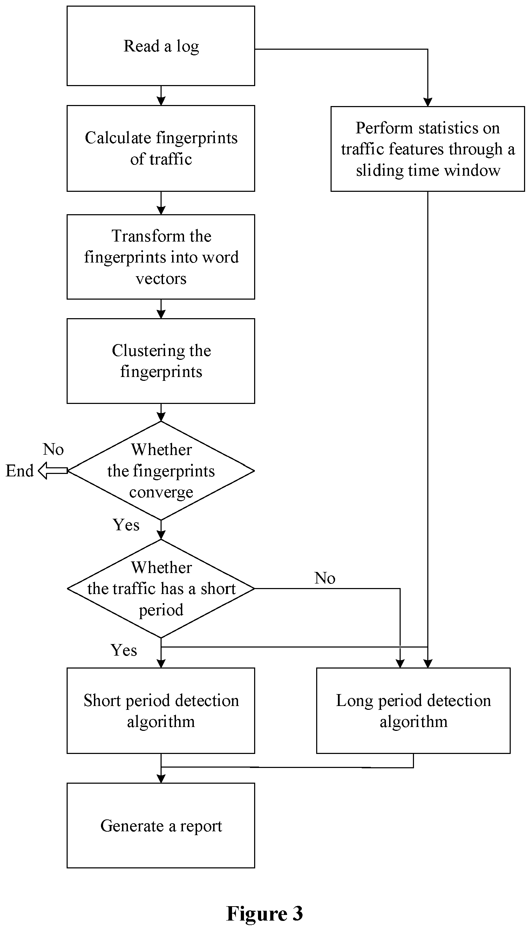

Reference is made to Figure 3. The present disclosure is descried trough the following embodiments by taking HTTP traffic as an example. A method as shown in Figure 3 includes the following steps 1 to 6.

In step 1, a log is read.

HTTP traffic for accessing a target host is read as a log file.

In step 2, fingerprints of the traffic are calculated.

A fingerprint of the HTTP traffic includes a request header fingerprint and a request body fingerprint. The fingerprint is a character string formed by elements combined by using a space as a separator. The request header fingerprint includes: a logarithm of a total length of request parameters, a quantity of the request parameters, a logarithm of an average length of the request parameters, a logarithm of a length of a uri, a quantity of hierarchies of a directory of the uri, a document extension, a request method type, a version of HTTP, abbreviations of domain names of header domains of request headers of the HTTP, abbreviations of domain names of header names of a part of the request headers of the HTTP, and local sensitive hash vales of domain values of header domains of a part of the request headers of the HTTP. The part of the request headers whose local sensitive hash values are calculated may include any one or a combination of: Connection, Accept-Encoding, Content-Encoding, Cache-Control, Te, Accept-Charset, Content-Type, Accept, Accept-Language, and User-Agent. The request body fingerprint includes entropy of a request body, and a logarithm of a length of the request body. Apparently, the request header fingerprint and the request body fingerprint may further include other information.

In step 3, statistics is performed on features of the traffic by using a sliding time window.

For the HTTP traffic, a transmission path is designated based on a source IP, a destination IP (an IP of the target host), a destination port and the host. A sliding time window is applied to the traffic transmitted through the transmission path, so as to determine the number of occurrences of traffic within each time window.

In step 4, for the fingerprints of traffic under fixed source IP, destination IP, destination port and host, a vector space model is built based on the fingerprints, in order to measure similarity of the fingerprints. Specifically, the fingerprints may be converted by using the TF-IDF algorithm.

In step 5, word vectors of the fingerprints are clustered and analyzed by using DBSCAN. It is determined whether the fingerprints tend to be consistent (i.e., whether the fingerprints have similarity). The process proceeds to step 6 in a case that the fingerprints tend to be consistent; and otherwise, the method terminates.

In step 6, an upper quartile is calculated for a sequence X of numbers of occurrences obtained based on the traffic on a same transmission path and tending to be consistent. In a case that the upper quartile is greater than a threshold, detection is performed by using the short-period detection algorithm. Otherwise, detection is performed by using the long-period detection algorithm. After the detection is completed, a report is generated.

As can be seen, a HTTP beacon behavior can be effectively identified in this embodiment. A beacon period can be accurately identified by using the short period detection algorithm and the long period detection algorithm, and the periodicity detection is accurate.

A traffic detection apparatus according to an embodiment of the present disclosure is described below. The traffic detection apparatus described below and the traffic detection method described above may be referred to each other.

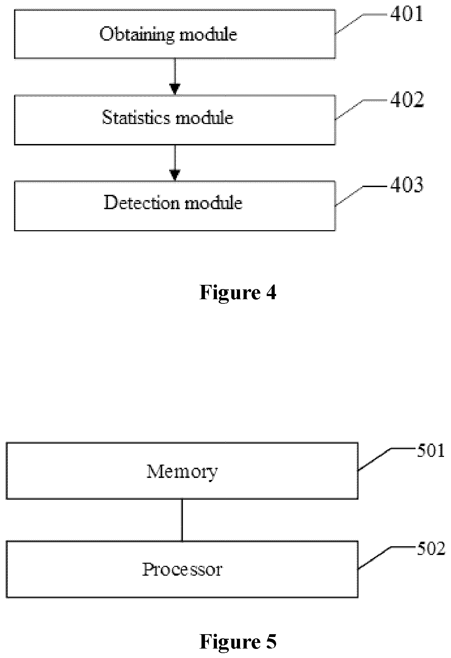

Reference is made to Figure 4. A traffic detection apparatus is provided according to an embodiment of the present disclosure. The traffic detection apparatus includes an obtaining module 401, a statistics module 402 and a detection module 403.

The obtaining module 401 is configured to obtain traffic for devices accessing a target host.

The statistics module 402 is configured to determine, by using a sliding time window, a number of occurrences of path-sharing traffic in the obtained traffic within each time window to obtain a sequence of numbers of occurrences.

The detection module 403 is configured to determine a periodicity detection algorithm corresponding to the sequence of numbers of occurrences, and detect the sequence of numbers of occurrences by using the periodicity detection algorithm to determine whether the path-sharing traffic has periodicity.

In an implementation, the traffic detection apparatus further includes a similarity detection module. The similarity detection module is configured to trigger, in a case that the traffic in the path-sharing traffic has similarity, steps of: determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity.

In an implementation, the similarity detection module includes a calculation unit, a clustering unit and a determination unit.

The calculation unit is configured to calculate fingerprints of traffic in the path-sharing traffic.

The clustering unit is configured to cluster the fingerprints of the traffic in the path-sharing traffic to obtain multiple clusters.

The determination unit is configured to determine that the traffic in the path-sharing traffic has similarity, in a case that any of the clusters has a traffic proportion greater than a preset first threshold.

In an implementation, the calculation unit is specifically configured to: for each traffic in the path-sharing traffic, calculate a request header fingerprint and a request body fingerprint of the traffic, and concatenate the request header fingerprint and the request body fingerprint to obtain a fingerprint of the traffic. The request header fingerprint includes a local sensitive hash value of a designated domain value.

In an implementation, the clustering unit is specifically configured to: for each of the fingerprints of the traffic in the path-sharing traffic, take the fingerprint as a transform object, calculate importance values of components of the transform object to the transform object, respectively; and convert the components of the transform object to the importance values, correspondingly, to transform the transform object into a word vector; and cluster all word vectors obtained through the transformation.

In an implementation, the detection module includes a sorting unit and a detection unit.

The sorting unit is configured to sort elements in the sequence of numbers of occurrences in a descending order based on values of the elements to obtain a descending sequence.

The detection unit is configured to select an element at a preset position in the descending sequence; determine, in a case that the selected element is less than or equal to a preset second threshold, a first algorithm as the periodicity detection algorithm corresponding to the sequence of numbers of occurrences; and determine, in a case that the selected element is greater than the preset second threshold, a second algorithm as the periodicity detection algorithm corresponding to the sequence of numbers of occurrences. A period to be detected by using the first algorithm is greater than a period to be detected by using the second algorithm.

In an implementation, the detection unit is specifically configured to: reduce a maximum value in the sequence of numbers of occurrences, and smooth, through sliding average filtering, the sequence of numbers of occurrences after the reduction to obtain a target sequence; plot a curve based on elements in the target sequence, and perform statistics on peak values and valley values in the curve to obtain a sequence of peak values and a sequence of valley values; delete a first element and a last element from the sequence of peak values to obtain a new sequence of peak values; delete a first element and a last element from the sequence of valley values to obtain a new sequence of valley value; subtract, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements; subtract, for every two adjacent elements in the new sequence of peak values, a former one of the adjacent elements from a later one of the adjacent elements to obtain a sequence of peak value differences; subtract, for every two adjacent elements in the new sequence of valley values, a former one of the adjacent elements from a later one of the adjacent elements to obtain a sequence of valley value differences; determine that the path-sharing traffic does not has periodicity, in a case that the number of elements in the new sequence of peak values is not equal to the number of elements in the new sequence of valley values; calculate an access period of the path-sharing traffic based on an average of the elements in the sequence of differences of corresponding elements and an average of the elements in the target sequence, and determine that the path-sharing traffic has periodicity, in a case that each of the sequence of differences of corresponding elements, the sequence of peak value differences and the sequence of valley value differences has a dispersion degree not greater than a dispersion degree threshold; and determine that the path-sharing traffic does not have periodicity, in a case that any one of the sequence of differences of corresponding elements, the sequence of peak value differences and the sequence of valley value differences has a dispersion degree greater than the dispersion degree threshold.

In an implementation, the reducing a maximum value in the sequence of numbers of occurrences includes: determining a target element at a Q-th position in the descending sequence, where the Q-th position is a position at which an upper ninth quantile is located; and determining, from the sequence of numbers of occurrences, an element greater than the target element as the maximum value, and amending the maximum value to be the target element..

In an implementation, the detection unit is specifically configured to: obtain, from the descending sequence, an element e at an E-th position and an element f at an F-th position; delete, from the sequence of numbers of occurrences, an element not falling within an interval $[e, f]$, and calculate an average of the remaining elements; and determine a ratio of a time length of the time window to the average as the access period of the oath-sharing traffic, and determine that the path-sharing has periodicity.

In an implementation, the traffic detection apparatus further includes a recording module. The recording module is configured to record, after the sequence of numbers of occurrences is detected by using the periodicity detection algorithm and it is determined that the path-sharing traffic has periodicity, a source IP and a destination IP of the path-sharing traffic, and an access period outputted through the periodicity detection algorithm, and add an abnormity identifier for at least one of the source IP or the path-sharing traffic.

For detailed operations of the modules and units in the embodiments, reference may be made to the description of the above embodiments, which is not repeated here.

As can be seen, with the traffic detection apparatus provided according to the embodiment, the accuracy of periodicity detection is improved, and the accuracy in detecting malicious traffic is improved.

An electronic device according to an embodiment of the present disclosure is described below. The electronic device described below and the traffic detection method and apparatus described above may be referred to each other.

Reference is made to Figure 5. An electronic device is provided according to an embodiment of the present disclosure. The electronic device includes a memory 501 and a processor 502.

The memory 501 stores a computer program.

The processor 502 is configured to execute the computer program to perform the traffic detection method according to any one of the above embodiments.

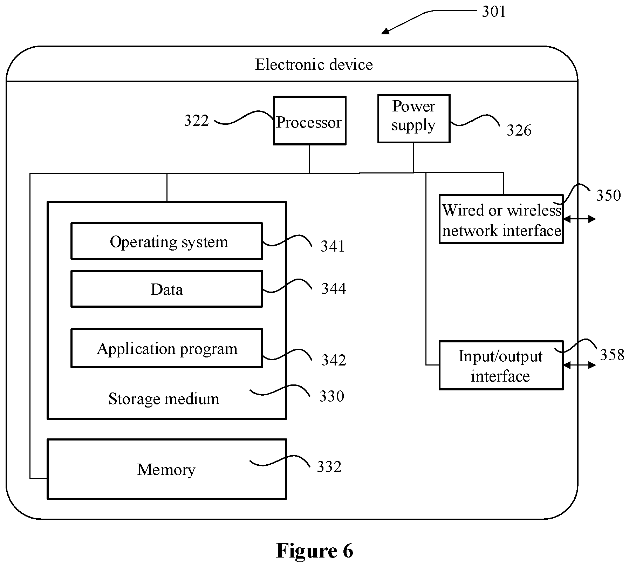

Reference is made to Figure 6, which is a schematic diagram of an electronic device according to another embodiment. The electronic device may vary significantly due to different configurations or performances. The electronic device may include at least one central processing unit (CPU) 322 (for example, one or more processors) and a memory 332, and at least one storage medium 330 (for example, one or more mass storage devices) that stores an application program 342 or data 344. The memory 332 and the storage medium 330 may realize temporary storage or persistent storage. The programs stored in the storage medium 330 may include one or more of above-mentioned modules (which are not illustrated in Figure 6). Each of the modules may include a series of instructions to a data processing device. Furthermore, the processer 322 may be configured to communicate with the storage medium 330, and execute the series of instruction in the storage mediums 330 on the electronic device 301.

The electronic device 301 may further include at least one power supply 326, at least one wired or wireless network interface 350, at least one input/output interface 358, and/or at least one operating system 341.

The operating system 341 is, for example, Windows ServerTM, Mac OS XTM, UnixTM, LinuxTM, FreeBSDTM, and the like.

In Figure 6, the application program 342 may be for performing the traffic detection method, and the data 344 may be data required for or generated in performing the traffic detection method.

The steps of the traffic detection method described above may be implemented by a structure of the electronic device.

A readable storage medium according to an embodiment of the present disclosure is described below. The readable storage medium described below, the traffic detection method, the traffic detection apparatus, and the device may be referred to each other.

The readable storage medium stores a computer program. The computer program, when executed by a processor, implements the traffic detection method according to the above embodiments. For steps of the method, reference may be made to corresponding content disclosed in the above embodiments, which is not repeated here.

Terms such as "first", "second", "third", "fourth" and the like (if exists) in the present disclosure are used for distinguishing similar objects, and are not used for describing specific orders or sequences. It should be understood that the above terms may be exchanged in proper cases so as to implement the embodiments described herein in other orders than an order shown or described herein. In addition, the terms "include" and "have" and any variations thereof are intended to cover non-exclusive inclusions. For example, a process, a method, or a device that includes a series of steps or units is not limited to those clearly listed steps or units, and may instead include other steps or units not explicitly listed or inherent to the process, method, or device.

It should be noted that, the terms "first", "second" and the like are for description purpose only, and should not be construed as indicating or implying relative importance or implying the number of the indicated technical features. Therefore, the features defined with "first", "second" or the like may include at least one of the features explicitly or implicitly. In addition, the technical solutions in the various embodiments may be combined with each other, on the basis that the combination can be realized by those of ordinary skills in the art. In a case that the combination of technical solutions is contradictory or cannot be realized, it should be considered that such a combination of technical solutions does not exist, and is not within the protection scope of the present disclosure.

The above embodiments in the specification are described in a progressive manner. Each of the embodiments mainly focuses on describing differences of the embodiment from other embodiments. Same or similar parts of the embodiments may be referred to each other.

The steps of the method or algorithm described in conjunction with the embodiments disclosed herein may be directly implemented by hardware, a software module executed by a processor, or a combination thereof. The software module may be arranged in a random access memory (RAM), a memory, a read only memory (ROM), an electrically programmable ROM, an electrically erasable programmable ROM, a register, a hard disk, a removable disk, a CD-ROM, or any other forms of storage medium known in art.

The principles and implementations of the present disclosure are clarified with specific examples herein. The above description of the embodiments is only intended to assist understanding the method and the key concept of the present disclosure. For those skilled in the art, modifications can be made to the specific embodiments and the application scopes based on the concept of the present disclosure, and as above, the specification should not be construed as a limitation to the present disclosure.

**Claims**

1. A traffic detection method, comprising:

   obtaining traffic for devices accessing a target host;
   determining, by using a sliding time window, a number of occurrences of path-sharing traffic in the obtained traffic within each time window to obtain a sequence of numbers of occurrences; and
   determining a periodicity detection algorithm corresponding to the sequence of numbers of occurrences, and detecting the sequence of numbers of occurrences by using the periodicity detection algorithm to determine whether the path-sharing traffic has periodicity.

2. The traffic detection method according to claim 1, further comprising:
   proceeding, on determining that the traffic in the path-sharing traffic has similarity, to the steps of: determining, by using a sliding time window, a number of occurrences of path-sharing traffic in the obtained traffic within each time window to obtain a sequence of numbers of occurrences; and determining a periodicity detection algorithm corresponding to the sequence of numbers of occurrences, and detecting the sequence of numbers of occurrences by using the periodicity detection algorithm to determine whether the path-sharing traffic has periodicity.

3. The traffic detection method according to claim 2, wherein the determining that the traffic in the path-sharing traffic has similarity comprises:

   calculating fingerprints of traffic in the path-sharing traffic;

   clustering the fingerprints of the traffic in the path-sharing traffic to obtain a plurality of clusters; and
   determining that the traffic in the path-sharing traffic has similarity, in a case that any of the clusters has a traffic proportion greater than a preset first threshold.

4. The traffic detection method according to claim 1, wherein the determining a periodicity detection algorithm corresponding to the sequence of numbers of occurrences comprises:

   sorting elements in the sequence of numbers of occurrences in a descending order based on values of the elements to obtain a descending sequence;
   selecting an element at a preset position in the descending sequence;
   determining, in a case that the selected element is less than or equal to a preset second threshold, a first algorithm as the periodicity detection algorithm corresponding to the sequence of numbers of occurrences; and determining, in a case that the selected element is greater than the preset second threshold, a second algorithm as the periodicity detection algorithm corresponding to the sequence of numbers of occurrences; and
   wherein a period to be detected by using the first algorithm is greater than a period to be detected by using the second algorithm.

5. The traffic detection method according to claim 4, wherein detecting the sequence of numbers of occurrences by using the first algorithm comprises:

   reducing a maximum value in the sequence of numbers of occurrences, and smoothing, through sliding average filtering, the sequence of numbers of occurrences after the reduction to obtain a target sequence;
   plotting a curve based on elements in the target sequence, and performing statistics on peak values and valley values in the curve to obtain a sequence of peak values and a sequence of valley values;
   deleting a first element and a last element from the sequence of peak values to obtain a new sequence of peak values;
   deleting a first element and a last element from the sequence of valley values to obtain a new sequence of valley value;
   subtracting, in a case that the number of elements in the new sequence of peak values is equal to the number of elements in the new sequence of valley values, the elements in the new sequence of valley values from the elements at corresponding positions in the new sequence of peak values, respectively, to obtain a sequence of differences of corresponding elements;

subtracting, for every two adjacent elements in the new sequence of peak values, a former one of the adjacent elements from a later one of the adjacent elements to obtain a sequence of peak value differences;

subtracting, for every two adjacent elements in the new sequence of valley values, a former one of the adjacent elements from a later one of the adjacent elements to obtain a sequence of valley value differences;

determining that the path-sharing traffic does not has periodicity, in a case that the number of elements in the new sequence of peak values is not equal to the number of elements in the new sequence of valley values;

calculating an access period of the path-sharing traffic based on an average of the elements in the sequence of differences of corresponding elements and an average of the elements in the target sequence, and determining that the path-sharing traffic has periodicity, in a case that each of the sequence of differences of corresponding elements, the sequence of peak value differences and the sequence of valley value differences has a dispersion degree not greater than a dispersion degree threshold; and

determining that the path-sharing traffic does not have periodicity, in a case that any one of the sequence of differences of corresponding elements, the sequence of peak value differences and the sequence of valley value differences has a dispersion degree greater than the dispersion degree threshold.

6. The traffic detection method according to claim 4, wherein detecting the sequence of numbers of occurrences by using the second algorithm comprises:

obtaining, from the descending sequence, an element e at an E-th position and an element f at an F-th position;

deleting, from the sequence of numbers of occurrences, an element not falling within an interval [e, f], and calculating an average of the remaining elements; and

determining a ratio of a time length of the time window to the average as the access period of the oath-sharing traffic, and determining that the path-sharing has periodicity.

7. The traffic detection method according to any one of claims 1 to 6, wherein the method further comprises:

after the determining that the path-sharing traffic has periodicity,

recording a source IP and a destination IP of the path-sharing traffic, and the access period outputted through the periodicity detection algorithm, and adding an abnormity identifier for at least one of the source IP or the path-sharing traffic.

8. A traffic detection apparatus, comprising:

an obtaining module, configured to obtain traffic for devices accessing a target host;

a statistics module, configured to determine by using a sliding time window, a number of occurrences of path-sharing traffic in the obtained traffic within each time window to obtain a sequence of numbers of occurrences; and

a detection module, configured to determine a periodicity detection algorithm corresponding to the sequence of numbers of occurrences, and detect the sequence of numbers of occurrences by using the periodicity detection algorithm to determine whether the path-sharing traffic has periodicity.

9. An electronic device, comprising:

a memory, storing a computer program; and

a processor, configured to execute the computer program to perform the traffic detection method according to any one of claims 1 to 7.

10. A readable storage medium storing a computer program, wherein the computer program, when executed by a processor, implements the traffic detection method according to any one of claims 1 to 7.

Obtain traffic for devices accessing a target host ⸺S101

Determine, by using a sliding time window, a number of occurrences of path-sharing traffic in the obtained traffic within each time window to obtain a sequence of numbers of occurrences ⸺S102

Determine a periodicity detection algorithm corresponding to the sequence of numbers of occurrences, and detect the sequence of numbers of occurrences by using the periodicity detection algorithm to determine whether the path-sharing traffic has periodicity ⸺S103

**Figure 1**

**Figure 2**

**Figure 3**

Obtaining module — 401

Statistics module — 402

Detection module — 403

**Figure 4**

Memory — 501

Processor — 502

**Figure 5**

301

Electronic device

322 Processor

Power supply 326

341 Operating system

344 Data

342 Application program

330 Storage medium

332 Memory

350 Wired or wireless network interface

358 Input/output interface

**Figure 6**

## INTERNATIONAL SEARCH REPORT

| | International application No. |
|---|---|
| | **PCT/CN2022/123295** |

**A. CLASSIFICATION OF SUBJECT MATTER**

H04L9/40(2022.01)i;H04L41/142(2022.01)i;H04L67/02(2022.01)i

According to International Patent Classification (IPC) or to both national classification and IPC

**B. FIELDS SEARCHED**

Minimum documentation searched (classification system followed by classification symbols)

IPC: H04L H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXT; USTXT; WOTXT; EPTXT; IEEE: 流量, 异常, 攻击, 访问量, 监测, 检测, 滚动, 滑动, 窗口, 次数, 数量, 数目, 频繁, 频率, 序列, 周期, 长, 大, 短, 小, 不同, 算法, 确定, 选择, flow, abnormal, attack+, access, detect+, Sliding, Roll+, Window, Number, Frequen+, Sequence, Period, long, short, Differen+, Algorithm, Determin+, Select+

**C. DOCUMENTS CONSIDERED TO BE RELEVANT**

| Category* | Citation of document, with indication, where appropriate, of the relevant passages | Relevant to claim No. |
|---|---|---|
| A | CN 111818050 A (TENCENT TECHNOLOGY (SHENZHEN) CO., LTD.) 23 October 2020 (2020-10-23)<br>description, paragraphs [0053]-[0113] | 1-10 |
| A | CN 113852603 A (JINGDONG SHUKE HAIYI INFORMATION TECHNOLOGY CO., LTD.) 28 December 2021 (2021-12-28)<br>entire document | 1-10 |
| A | CN 110611684 A (STATE GRID ELECTRIC POWER RESEARCH INSTITUTE CO., LTD. et al.) 24 December 2019 (2019-12-24)<br>entire document | 1-10 |
| A | CN 113419890 A (BANK OF CHINA CO., LTD.) 21 September 2021 (2021-09-21)<br>entire document | 1-10 |
| A | US 2019215330 A1 (MICROSOFT TECHNOLOGY LICENSING LLC.) 11 July 2019 (2019-07-11)<br>entire document | 1-10 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 March 2023** | **16 March 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/123295** |

### C. DOCUMENTS CONSIDERED TO BE RELEVANT

| Category* | Citation of document, with indication, where appropriate, of the relevant passages | Relevant to claim No. |
| --- | --- | --- |
| A | US 2016080404 A1 (CISCO TECHNOLOGY, INC.) 17 March 2016 (2016-03-17)<br>entire document | 1-10 |

Form PCT/ISA/210 (second sheet) (July 2022)

**INTERNATIONAL SEARCH REPORT**
Information on patent family members

International application No.

**PCT/CN2022/123295**

| Patent document cited in search report | | | Publication date (day/month/year) | Patent family member(s) | | | Publication date (day/month/year) |
|---|---|---|---|---|---|---|---|
| CN | 111818050 | A | 23 October 2020 | None | | | |
| CN | 113852603 | A | 28 December 2021 | None | | | |
| CN | 110611684 | A | 24 December 2019 | None | | | |
| CN | 113419890 | A | 21 September 2021 | None | | | |
| US | 2019215330 | A1 | 11 July 2019 | US | 11223637 | B2 | 11 January 2022 |
| US | 2016080404 | A1 | 17 March 2016 | US | 2016226902 | A1 | 04 August 2016 |
| | | | | US | 9531742 | B2 | 27 December 2016 |
| | | | | US | 9344441 | B2 | 17 May 2016 |

Form PCT/ISA/210 (patent family annex) (July 2022)

**EP 4 322 430 A1**

**Patent documents cited in the description**

- CN 202210762426